# EUROPÄISCHE PATENTSCHRIFT

(11) **EP 4 122 800 B1**
(45) Veröffentlichungstag und Bekanntmachung des Hinweises auf die Patenterteilung: **02.04.2025**
(21) Anmeldenummer: 22185344.3
(22) Anmeldetag: 18.07.2022
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 22.07.2021 DE 102021207887
(43) Veröffentlichungstag der Anmeldung: 25.01.2023
(73) Patentinhaber: thyssenkrupp Presta Aktiengesellschaft, 9492 Eschen (LI); thyssenkrupp AG, 45143 Essen (DE)
(72) Erfinder: Galehr, Robert, 9486 Schaanwald (LI); Nagy, Balint Kalman, 9462 Montlingen (CH)
(74) Vertreter: thyssenkrupp Intellectual Property GmbH

(56) Entgegenhaltungen:
- EP-A1- 3 315 381
- WO-A1-2015/124944
- JP-A- 2008 044 498
- US-B2- 8 505 407

## Beschreibung

Die Erfindung betrifft eine Lenksäule für ein Kraftfahrzeug, mit einer Stelleinheit, in der eine Lenkspindel um eine Längsachse drehbar gelagert ist, und die einen an einer Trageinheit verstellbar festlegbaren Außenmantel aufweist, der auf einem teleskopartig verstellbaren Innenmantel verspannbar ist, wobei der Außenmantel einen Rohrkörper mit einem zumindest abschnittweise in Längsrichtung erstreckten Klemmschlitz aufweist, und zwei einander bezüglich der Längsachse beiderseits des Klemmschlitzes gegenüberliegende, parallel zur Längsachse erstreckte Seitenwangen aufweist, die mit dem Rohrkörper verbunden sind und die jeweils ein von dem Rohrkörper beabstandetes, in Längsrichtung erstrecktes Langloch aufweisen, wobei ein Spannbolzen einer Spanneinrichtung durch die beiden Langlöcher und mindestens eine Öffnung der Trageinheit hindurchgeführt ist, und über den Spannbolzen eine die Seitenwangen gegeneinander belastende Spannkraft aufbringbar ist.

Zur Anpassung der Lenkradposition an die Sitzposition des Fahrers eines Kraftfahrzeugs sind längenverstellbare Lenksäulen bekannt, bei denen das am hinteren Ende der Lenkspindel angebrachte Lenkrad in Längsrichtung, d.h. in Richtung der Lenksäulen-Längsachse im Fahrzeuginnenraum positioniert werden kann.

Die Lenkspindel ist in einer Stelleinheit um die Längsachse drehbar gelagert. Die Stelleinheit umfasst einem Innenmantel, der auch als inneres oder Innenmantelrohr bezeichnet wird. Der Innenmantel ist in einem Außenmantel, auch als äußeres Mantelrohr, Außenmantelrohr oder Führungskasten bezeichnet, in Längsrichtung teleskopartig verstellbar aufgenommen. Der Außenmantel ist von einer an der Fahrzeugkarosserie angebrachten Trageinheit gehalten, und ist dabei zur Längsverstellung relativ zur Trageinheit in Längsrichtung verstellbar. Für eine optionale Höhenverstellung der Stelleinheit kann der Außenmantel zusätzlich relativ zur Trageinheit in Höhenrichtung, quer zur Längsrichtung, verstellbar sein.

Bei einer gattungsgemäßen Lenksäule, die beispielsweise in der EP 3 315 381 A1 beschrieben ist, ist eine Spanneinrichtung vorgesehen, die auch als Feststelleinrichtung bezeichnet wird und wahlweise zum Fahrbetrieb in eine Fixierstellung oder zur Verstellung in eine Lösestellung gebracht werden kann. In der Lösestellung ist der Innenmantel teleskopartig in dem Außenmantel verschiebbar, und in der Fixierstellung ist der Innenmantel lösbar mit dem Außenmantel verspannt. Der Innenmantel ist längs in Fahrtrichtung vorn, von der Fahrerposition aus gesehen unten an Fahrzeugkarosserie abgestützt, und wird daher auch als vorderer oder unterer Mantel bezeichnet. Der Außenmantel wird entsprechend auch als hinterer oder oberer Mantel bezeichnet, der relativ zur Trageinheit beim Verstellen längs verlagerbar ist.

Der Außenmantel weist einen Rohrkörper mit einem längs über einen Teilabschnitt erstreckten Klemmschlitz auf, an dessen Randbereichen die Spanneinrichtung angreift, um eine Spannkraft in Umfangsrichtung auszuüben, welche zum Fixieren den Klemmschlitz zusammenzieht, so dass der Innenquerschnitt des Rohrkörpers verengt und der Innenmantel darin eingespannt wird. Die Einleitung der Spannkraft in den Rohrkörper erfolgt über beiderseits des Klemmschlitzes gegenüberliegend an dem Rohrkörper angebrachte, parallel zur Längsachse erstreckte Seitenwangen. Ein in der Trageinheit gelagerter, bezüglich der Längsrichtung fixierter Spannbolzen, durchsetzt längs gerichtete, einander in Umfangsrichtung gegenüberliegende Langlöcher in den Seitenwangen.

Zur Längsverstellung kann der Außenmantel bei gelöster Spanneinrichtung in Richtung der Längsachse relativ zum Innenmantel und relativ zur Trageinheit verlagert werden. Dabei bewegt sich der in der Trageinheit in Längsrichtung feststehende Spannbolzen in den Langlöchern entlang.

Bei Betätigung der Spanneinrichtung zum Fixieren wird über eine Hubeinrichtung von dem Spannbolzen eine die beiden Seitenwangen gegeneinander belastende Spannkraft ausgeübt, so dass der Klemmschlitz zusammengezogen wird, und der Innenmantel im Rohrkörper festgeklemmt wird. Gleichzeitig kann der Spannbolzen auch Seitenschenkel der Trageinheit durchsetzen, zwischen denen der Außenmantel aufgenommen ist. Durch die in der Fixierstellung ausgeübte Spannkraft werden die Seitenschenkel gegen die Seitenwangen verspannt, so dass der Außenmantel lösbar mit der Trageinheit fixiert ist.

In dem genannten Stand der Technik sind die beiden Seitenwangen an einem offenen Profilteil ausgebildet, welches auf seiner dem Rohrkörper abgewandten Außenseite geschlossen ist und dessen Kanten beiderseits des Klemmschlitzes mit dem Rohrkörper verbunden sind. Als nachteilig hat sich dabei herausgestellt, dass die effektiv zur Fixierung auf den Rohrkörper übertragene Spannkraft abhängig von der Verstellposition in Längsrichtung variiert, welche mit einer unterschiedlichen Längsposition des Spannbolzens in dem Langloch einhergeht. Angesichts der vorangehend erläuterten Problematik ist es eine Aufgabe der vorliegenden Erfindung, eine von der Verstellposition unabhängigere, gleichmäßigere Übertragung der Spannkraft zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, mit einer Stelleinheit, in der eine Lenkspindel um eine Längsachse drehbar gelagert ist, und die einen an einer Trageinheit verstellbar festlegbaren Außenmantel aufweist, der auf einem teleskopartig verstellbaren Innenmantel verspannbar ist, wobei der Außenmantel einen Rohrkörper mit einem zumindest abschnittweise in Längsrichtung erstreckten Klemmschlitz aufweist, und zwei einander bezüglich der Längsachse beiderseits des Klemmschlitzes gegenüberliegende, parallel zur Längsachse erstreckte Seitenwangen aufweist, die mit dem Rohrkörper verbunden sind und die jeweils ein von dem Rohrkörper beabstandetes, in Längsrichtung erstrecktes Langloch aufweisen, wobei ein Spannbolzen einer Spanneinrichtung durch die beiden Langlöcher und mindestens eine Öffnung der Trageinheit hindurchgeführt ist, und über den Spannbolzen eine die Seitenwangen gegeneinander belastende Spannkraft aufbringbar ist, ist erfindungsgemäß vorgesehen, dass jede Seitenwange jeweils einen von dem Rohrkörper frei abstehenden achsfernen Außenbereich aufweist, der das Langloch umfasst, und einen an dem Rohrkörper fixierten achsnahen Innenbereich, wobei jeweils ein Stützelement mit einer Seitenwange zwischen dem Langloch und dem Innenbereich verbunden ist und mit dem Rohrkörper in einem Randbereich des Klemmschlitzes verbunden ist.

Gemäß der Erfindung weist jede Seitenwange einen Innenbereich auf, der auch als achsnaher oder mantelnaher Endbereich bezeichnet wird, welcher dem Rohrkörper zugewandt und mit diesem verbunden ist, und einen Außenbereich, der auch als achsferner oder äußerer Endgereich bezeichnet wird und mit seinem dem Innenbereich gegenüberliegenden Ende quer zur Längsachse nach außen von dem Rohrkörper absteht. Der Außenbereich bildet einen frei vorstehenden Endbereich, der zumindest nicht direkt mit dem Rohrkörper und auch nicht direkt mit der anderen Seitenwange verbunden ist. Das Langloch ist in dem frei vorstehenden Außenbereich angeordnet. Das bedeutet, dass die Seitenwange ausschließlich in dem vom Langloch aus gesehen innen liegenden Bereich zwischen dem Langloch und dem inneren Ende mit dem Rohrkörper verbunden ist.

Ein Vorteil der Erfindung resultiert daraus, dass die frei vorstehenden Außenbereiche ungehindert in Umfangsrichtung durch die von der Spanneinrichtung im Bereich der Langlöcher eingeleitete Spannkraft gegeneinander verspannt werden können, und zwar unabhängig von der relativen Längsposition des Spannbolzens im Langloch. Dadurch ist die Übertragung der Spannkraft zur Fixierung von Innen- und Außenmantel unabhängig vom Verstellzustand der Lenksäule.

Das an dem Außenbereich abgestützte Stützelement dient bildet ein Versteifungselement, welches die elastische Verformung der Seitenwange beim Verspannen der Spanneinrichtung verringert und damit für eine verbesserte und gleichmäßigere Kraftübertragung zwischen der Seitenwange und dem Rohrkörper sorgt.

Erfindungsgemäß wird die vorteilhafte Übertragung der Spannkraft dadurch weiter verbessert, dass jede Seitenwange in ihrem Innenbereich an zwei in Umfangsrichtung voneinander beabstandeten Umfangsbereichen mit dem Rohrkörper verbunden ist. Dabei kann eine erste Verbindung in dem inneren Endbereich erfolgen, in dem die Seitenwange das Mantelrohr direkt kontaktiert, beispielsweise tangential von außen gegen den Rohrkörper anliegt. Diese erste Verbindung kann bevorzugt als direkte Verbindung ausgeführt sein, beispielsweise eine Fügeverbindung, wie eine Schweißnaht, durch welche die Seitenwange ohne zwischengefügte Verbindungselemente unmittelbar am Außenumfang des Rohrkörpers fixiert ist. Eine zweite Verbindung ist erfindungsgemäß zwischen der besagten ersten Verbindung und dem Langloch angeordnet. Dort ist zwischen der Seitenwange und dem Rohrkörper erfindungsgemäß ein Stützelement eingefügt, dass von der Seitenwange absteht und in Umfangsrichtung abgestützt in einem Randbereich des Klemmschlitzes mit dem Rohrkörper verbunden ist, bevorzugt durch eine feste Fügeverbindung wie eine Schweißnaht oder dergleichen. Über das Stützelement wird eine direkte, optimierte Übertragung der über die Langlöcher eingeleiteten Spannkraft in den Bereich des Klemmschlitzes ermöglicht, so dass die ausgeübte Spannkraft praktisch vollständig zur Verringerung der Schlitzbreite und damit zur Verspannung zur Verfügung steht, und zwar unabhängig vom Verstellzustand der Lenksäule.

Die beiden Seitenwangen sind spiegelsymmetrisch beiderseits der Längsachse angeordnet. Durch die erfindungsgemäß frei vorstehenden Außenbereiche und die zusätzliche Versteifung und Fixierung über das Stützelement wird eine optimierte Übertragung der Spannkraft ermöglicht.

Eine Seitenwange erstreckt sich zwischen ihrem Innen- und Außenbereich bevorzugt flächenhaft parallel zu einer Tangentialebene des bevorzugt zylindrischen Rohrkörpers. Die frei vorstehenden Außenbereiche der beiden Seitenwangen liegen einander im Wesentlichen parallel - in einem Winkel von kleiner 10°, bevorzugt kleiner 5° - gegenüber. Die Langlöcher fluchten miteinander, und werden von dem Spannbolzen in Umfangsrichtung, sprich in einer Richtung orthogonal zur Längsachse, durchsetzt.

Die Spanneinrichtung kann in an sich bekannter Weise den quer zur Längsachse durch die Seitenwangen durchgehenden Spannbolzen aufweisen, der mit einem axialen Widerlager und einem Spannmechanismus verbunden ist, wobei das Widerlager sich von außen gegen die eine Seitenwange und das Spanngetriebe sich von außen gegen die andere Seitenwange abstützt. Der Spannmechanismus kann in an sich bekannter Weise eine Hubmechanik aufweisen sein, welche bei Betätigung eines Betätigungselements, beispielsweise durch Drehung des Spannbolzens mittels eines manuell bedienbaren Spannhebels, auf den Spannbolzen einen axialen Spannhub und dadurch eine Spannkraft ausübt, welche die beiden Seitenwangen gegeneinander zusammenzieht. Derartige Spanneinrichtungen sind im Prinzip bekannt und können als Hubmechanik beispielsweise eine Keil-, Nocken- oder Kippstift-Anordnung aufweisen, die eine Drehung des Spannbolzens in einen axialen Spannhub bzw. eine Spannkraft umsetzt.

Alternativ zu einem Betätigungshebel kann die Spanneinrichtung auch durch einen motorischen Antrieb betätigt werden.

Die Seitenwangen und/oder die Stützelemente können plattenförmig ausgebildet sein. Diese können rationell als im Wesentlichen ebene Blechteile oder -zuschnitte bereitgestellt werden, beispielsweise als Stanzteile, bevorzugt aus Stahlblech.

Eine vorteilhafte Ausführung ist, dass die Seitenwangen, die Stützelemente und der Rohrkörper Blechformteile aufweisen. Blechformteile können anwendungsoptimiert und kostengünstig bevorzugt durch Kaltumformverfahren wie Pressen, Stanzen und dergleichen gefertigt werden, vorzugsweise aus Stahlblech.

Bevorzugt kann vorgesehen sein, dass die Seitenwangen, die Stützelemente und/oder der Rohrkörper über Fügeverbindungen miteinander verbunden sind. Die Fügeverbindungen können vorzugsweise als unlösbare, stoffschlüssige Fügeverbindungen ausgeführt sein, beispielsweise durch Schweißen. Laserschweißen oder dergleichen. Es können punktuelle oder zumindest abschnittweise längs durchgehende Schweißnähte erzeugt werden, welche mit geringem Fertigungsaufwand dauerhaft belastbare und sichere Verbindungen ermöglichen.

Bevorzugt können die Seitenwangen und der Stützelemente als einfach geformte Blechzuschnitten bereitgestellt werden, und der Rohrkörper als Rohrmaterial-Abschnitt. Die Fügeverbindungen ermöglichen eine rationelle Konstruktion und Fertigung einer formsteifen Konstruktion aus derartigen kostengünstig verfügbaren Einzelteilen, so dass die erfindungsgemäßen Vorteile mit geringem Aufwand realisierbar sind.

Eine Seitenwange kann in ihrem Innenbereich direkt mit dem Rohrkörper verbunden sein. Die Verbindung kann beispielsweise eine Verschweißung in dem achsnahen Bereich umfassen, in dem die Seitenwange tangential von außen an dem zylindrischen Rohrkörper anliegt. Beispielsweise kann eine Schweißnaht zwischen der Kante am inneren Ende der Seitenwange und dem Außenumfang des Rohrkörpers gelegt werden. Auf diese Weise kann eine mit geringem Aufwand eine erste Verbindung wie oben beschrieben realisiert sein.

Es kann vorgesehen sein, dass ein Stützelement mit einer Seitenwange zwischen dem Innenbereich und dem Außenbereich verbunden ist. Dadurch, dass das Stützelement Abstand zum Innenbereich hat, kann der Innenbereich eine erste Verbindung mit dem Rohrkörper aufweisen, und das Stützelement eine zweite Verbindung. Die erste Verbindung und die zweite Verbindung können auf dem Außenumfang des Rohrkörpers in Umfangsrichtung beabstandet sein. Die beabstandeten Verbindungen ermöglichen eine optimierte Einleitung und Übertragung der Spannkraft.

Bevorzugt kann ein Stützelement jeweils in einem Randbereich eines Langlochs mit der Seitenwange verbunden ist. Die Spannkraft wird über den Spannbolzen im Bereich des Langlochs in die Seitenwange eingekoppelt. Dadurch, dass das Stützelement mit relativ geringem Abstand benachbart zum Langloch mit der Seitenwange verbunden ist, beispielsweise mittels einer Schweißverbindung, kann die elastische Verformung beim Verspannen verringert werden, wodurch die Übertragung der Spannkraft optimiert wird.

Ein Stützelement kann bevorzugt winklig von einer Seitenwange abstehen. Dadurch kann die Spannkraft von der tangential erstreckten Seitenwange über das Stützelement einfach in Umfangsrichtung in den Rohrkörper eingekoppelt werden. Die Anordnung ermöglicht eine optimierte Kraftübertragung und eine hohe Steifigkeit.

Eine vorteilhafte Ausführung kann vorsehen, dass die Stützelemente auf einem dem Klemmschlitz zugewandten Umfangsabschnitt mit dem Rohrkörper verbunden sind, und die Innenbereiche auf einem dem Klemmschlitz abgewandten Umfangsabschnitt mit dem Rohrkörper verbunden sind. Erfindungsgemäß stehen die Außenbereiche der Seitenwangen bezüglich der Längsachse frei von dem Umfangsabschnitt vor, der den Klemmschlitz aufweist, mit anderen Worten der den Klemmschlitz aufweisenden Umfangshälfte. Für eine hohe Steifigkeit ist es vorteilhaft, dass die Stützelemente ebenfalls in diesem Umfangsbereich angeordnet sind, wie vorangehend erläutert ist. Dadurch, dass die Innenbereiche, bevorzugt durch eine direkte Verbindung, im Bereich der dem Klemmschlitz gegenüberliegenden Umfangshälfte mit dem Rohrkörper verbunden sind, können die beim Verspannen auftretenden elastischen Verformungen derart gering gehalten werden, dass keine funktionalen Beeinträchtigungen auftreten.

Es ist möglich, dass das der Rohrkörper zumindest abschnittweise hohlzylindrisch ausgebildet ist. Dies ermöglicht die rationelle Fertigung aus einem zylindrischen Rohrabschnitt. Die Verspannung des kreisrunden Innenquerschnitts auf einem zylindrischen Innenmantel wird ebenfalls vereinfacht.

In einer vorteilhaften Weiterbildung kann es vorgesehen sein, dass die Seitenwange, der Rohrkörper und das Stützelement eine Art tunnelförmigen Durchgang bilden, der sich in Längsrichtung erstreckt, und bevorzugt außen an dem Mantelrohr entlang verläuft Der tunnelförmige Durchgang bietet den Vorteil, dass dieser einen geschützten Raum bietet, beispielsweise als Kabelkanal zur Hindurchführung von Kabeln entlang der Stelleinheit, z.B. für einen Lenkstockschalter.

Eine vorteilhafte Ausführung ist, dass die Seitenwangen zwischen Seitenschenkeln der Trageinheit angeordnet sind, die von dem Spannbolzen durchsetzt und gegen die Seitenwangen verspannbar sind. Die Trageinheit weist zwei nach unten, quer zur Längsachse gerichtete Seitenschenkel auf, zwischen denen der Außenmantel zur Realisierung einer Höhenverstellung in Höhenrichtung nach oben und unten verstellbar angeordnet sein kann. Durch die Spanneinrichtung können die Seitenschenkel in Fixierstellung mit der Spannkraft gegen die Seitenwangen des Außenmantels verspannt werden, so dass die Lenksäule in Höhenrichtung fixiert ist. Die Spannkraft dient folglich gleichzeitig zur Fixierung in Längs- und Höhenrichtung, wobei dank der Erfindung eine optimierte Funktion unabhängig vom Verstellzustand der Lenksäule ermöglicht wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer weiteren schematischen perspektivischen Ansicht,
- Figur 3: einen Querschnitt durch die Lenksäule gemäß Figur 1 und 2,
- Figur 4: den Außenmantel der Lenksäule gemäß Figuren 1 bis 3 in einer freigestellten perspektivischen Ansicht,
- Figur 5: den Außenmantel gemäß Figur 4 in einer weiteren perspektivischen Ansicht,
- Figur 6: einen Querschnitt durch den Außenmantel gemäß Figur 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

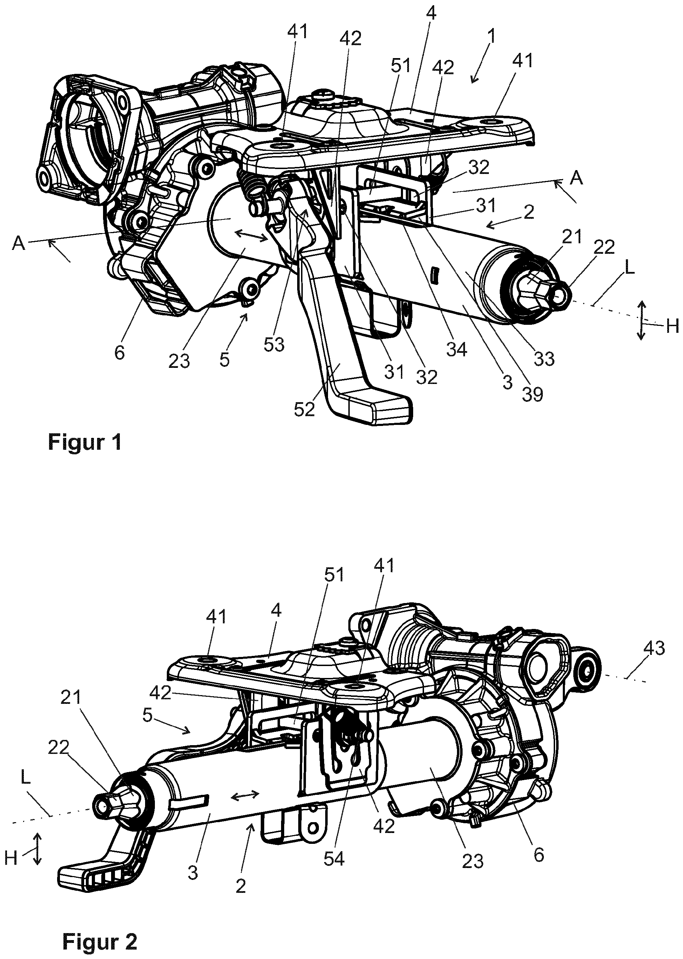

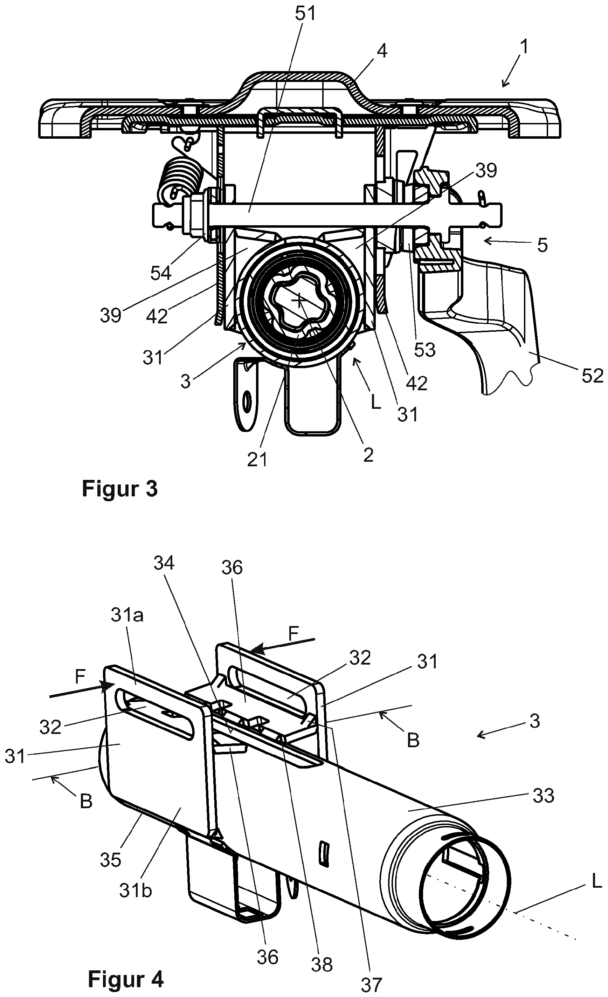

Figuren 1 und 2 zeigen eine erfindungsgemäße Lenksäule 1 in unterschiedlichen perspektivischen Ansichten, Figur 1 bezüglich der Fahrtrichtung von hinten links und Figur 2 von hinten rechts. Figur 3 zeigt einen Querschnitt A-A gemäß Figur 1.

Die Lenksäule 1 umfasst eine Stelleinheit 2, in der eine Lenkspindel 21 um eine in Längsrichtung erstreckte Längsachse L drehbar gelagert ist. An ihrem hinteren bzw. oberen, der Fahrerposition zugewandten Ende weist die Lenkspindel 21 einen Befestigungsabschnitt 22 zur Anbringung eines nicht dargestellten Lenkrads auf.

Die Stelleinheit 2 umfasst einen Innenmantel 23, der im vorderen bzw. unteren Bereich angeordnet ist und daher auch als unterer Mantel bezeichnet wird. Der rohrförmige, im gezeigten Beispiel zylindrische Innenmantel 23 ist in Längsrichtung teleskopartig verstellbar in einen erfindungsgemäß ausgestalteten Außenmantel 3 aufgenommen, wie mit dem Doppelpfeil angedeutet ist. Der Außenmantel 3 wird gleichbedeutend auch als oberer Mantel bezeichnet, und lagert die Lenkspindel 21 mit dem Befestigungsabschnitt 22.

Der Außenmantel 3 weist zwei beiderseits der Längsachse L angeordnete Seitenwangen 31 auf. Die Seitenwangen 31 weisen in Längsrichtung erstreckte Langlöcher 32 auf, die einander quer zur Längsachse L deckungsgleich gegenüberliegen.

Eine Trageinheit 4 weist Befestigungsöffnungen 41 zur Anbringung an einer nicht dargestellten Fahrzeugkarosserie auf. Von der Trageinheit 4 erstrecken sich zwei Seitenschenkel 42 nach unten. Zwischen den Seitenschenkeln 42 ist der Außenmantel 3 aufgenommen, wobei die Seitenschenkel 42 von außen an den Seitenwangen 31 anliegen.

Eine Spanneinrichtung 5 umfasst einen Spannbolzen 51, der in den Seitenschenkel 42 drehbar gelagert ist und quer zur Längsachse L durch die Langlöcher 32 hindurchgeführt. Zur Höhenverstellung kann der Spannbolzen 51 in Höhenrichtung H in den Seitenschenkeln 42 geführt sein.

An dem Spannbolzen 51 ist ein Spannhebel 52 angebracht, mit dem der Spannbolzen 51 um seine Achse gedreht werden kann.

An dem einen, in Figur 1 dem Betrachter zugewandten Ende weist die Spanneinrichtung 5 ein Hubgetriebe 53 auf, welches außen an dem einen Seitenschenkel 42 abgestützt ist und mit dem Spannbolzen 51 zusammenwirkt. An dem anderen, in Figur 2 dem Betrachter zugewandten Ende, ist der Spannbolzen 51 über ein Widerlager 54 zugfest von außen gegen den anderen Seitenschenkel 42 abgestützt.

Durch manuelle Betätigung des Spannhebels 52 kann der Spannbolzen 51 zum Fixieren gedreht werden, wodurch das Hubgetriebe 53 einen Spannhub auf den Spannbolzen 42 ausübt, der die beiden Seitenschenkel 42 gegeneinander zusammenzieht, und mit der ausgeübten Spannkraft F gegen die Seitenwangen 31 verspannt.

Wird Spanneinrichtung 5 durch entgegengesetzte Betätigung in Lösestellung gebracht, kann der Außenmantel 3 samt der Lenkspindel 21 relativ zur Trageinheit 4 zur Einstellung unterschiedlicher Längsverstellungen in Längsrichtung vor oder zurückbewegt werden, wobei sich der Spannbolzen 51 in den Langlöchern 32 entlangbewegt.

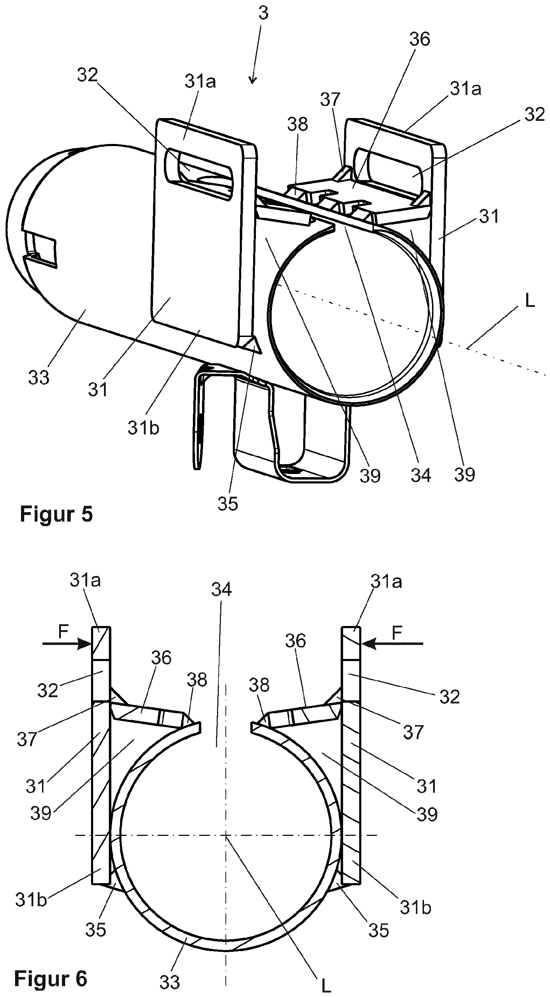

Der Außenmantel 3 ist freigestellt in den Figuren 4 und 5 in unterschiedlichen perspektivischen Absichten gezeigt, und in Figur 5 in einem Querschnitt B-B gemäß Figur 4.

Der Außenmantel 3 weist einen hohlzylindrischen Rohrkörper 33 auf, der in seiner oberen Umfangshälfte einen Klemmschlitz 34 aufweist. Der Klemmschlitz 34 erstreckt sich parallel zur Längsachse L über einen Teilabschnitt der Länge in dem Bereich, in dem die Seitenwangen 31 angebracht sind und über diesen hinaus.

Wie in den Figuren 3 bis 6 gut erkennbar ist, sind die Seitenwangen 31 plattenförmig ausgebildet, beispielsweise als im Wesentlichen ebene Blechabschnitte, die sich parallel zur Längsachse L erstrecken.

Die Langlöcher 32 sind jeweils in einem frei von dem Rohrkörper 33 abstehenden Außenbereich 31a der Seitenwange 31 angeordnet. Dort wird auch beim Fixieren über den durch die Langlöcher 32 hindurchgeführten Spannbolzen 51 die Spannkraft F von außen auf die Seitenwangen 31 aufgebracht, wie schematisch in den Figuren 4 und 6 eingezeichnet ist.

In dem Innenbereich 31b, der dem freien Außenbereich 31a abgewandt ist, liegt die Seitenwange 31 tangential von außen an dem Rohrkörper 33 an, und zwar etwa in Höhe der Längsachse L. An Rand des Innenbereichs 31b ist zur Verbindung mit dem Rohrkörper 33 jeweils eine Fügeverbindung 35 ausgebildet, beispielsweise Schweißnähte. Dabei liegen diese Fügeverbindungen 35 auf der unteren, dem Klemmschlitz 34 bezüglich der Längsachse L gegenüberliegenden Umfangshälfte des Rohrkörpers 33.

Zwischen dem Außenbereich 31a einer Seitenwange 31 und dem Rohrkörper 33 ist jeweils ein Stützelement 36 angeordnet, welches plattenförmig ausgebildet ist, beispielsweise ebenfalls als im wesentlichen ebener Blechabschnitt. Das Stützelement 36 ist mit der Seitenwange 31 über eine bevorzugt als Verschweißung ausgebildete Fügeverbindung 37 verbunden, die zwischen dem Langloch 32 und dem Innenbereich 31b an der Seitenwange 31 angeordnet ist, vorzugsweise in der Nähe des Langlochs 32.

Mittels einer weiteren Fügeverbindung 38, beispielsweise ebenfalls einer Verschweißung, ist das Stützelement 36 im Randbereich des Klemmschlitzes 34 fest mit dem Rohrkörper 33 verbunden.

Die auf die Seitenwangen 31 ausgeübte Spannkraft F wird über die Stützelemente 36 unabhängig von der eingestellten Längsposition gleichbleibend eingekoppelt, so dass die zum Fixieren der Spanneinrichtung 5 erforderliche manuelle Betätigungskraft gleichbleibt.

Die Blechabschnitte der Seitenwangen 31 und der Stützelemente 36 können vorzugsweise aus Stahl ausgebildet sein, ebenso wie der Rohrkörper 33.

Die Seitenwange 31, der Rohrkörper 33 und das Stützelement 36 bilden einen tunnelförmigen Durchgang 39, der sich in Längsrichtung L erstreckt, und als eine Art Kabelkanal außen am Außenmantel 3 entlangläuft.

Zur Höhenverstellung kann die Stelleinheit 2 um eine horizontale, quer zur Längsachse L im vorderen bzw. unteren Bereich liegende Schwenkachse 43 in Höhenrichtung relativ zur Fahrzeugkarosserie verschwenkbar sein.

Es kann ein elektromotorischer Antrieb 6 vorgesehen sein, der mit dem Innenmantel 23 verbunden ist, und durch den ein motorisch erzeugtes Drehmoment in die Lenkspindel 21 einkoppelbar ist, beispielsweise ein Hilfsmoment zur Lenkunterstützung bei einer Hilfskraftlenkung, oder auch ein Feedback-Moment als simuliertes manuelles Feedback bei einer Steerby-Wire-Lenkung.

### Bezugszeichenliste

- 1: Lenksäule
- 2: Trageinheit
- 21: Lenkspindel
- 22: Befestigungabschnitt
- 23: Innenmantel
- 3: Außenmantel
- 31: Seitenwange
- 31a: Außenbereich
- 31b: Innenbereich
- 32: Langloch
- 33: Rohrkörper
- 34: Klemmschlitz
- 35: Fügeverbindung
- 36: Stützelement
- 37, 38: Fügeverbindung
- 39: Durchgang
- 4: Trageinheit
- 41: Befestigungsöffnungen
- 42: Seitenschenkel
- 43: Schwenkachse
- 5: Spanneinrichtung
- 51: Spannbolzen
- 52: Spannhebel
- 53: Hubgetriebe
- 54: Widerlager
- 6: Antrieb

## Patentansprüche

1. Lenksäule (1) für ein Kraftfahrzeug, mit einer Stelleinheit (2), in der eine Lenkspindel (21) um eine Längsachse (L) drehbar gelagert ist, und die einen an einer Trageinheit (4) verstellbar festlegbaren Außenmantel (3) aufweist, der auf einem teleskopartig verstellbaren Innenmantel (23) verspannbar ist, wobei der Außenmantel (3) einen Rohrkörper (33) mit einem zumindest abschnittweise in Längsrichtung erstreckten Klemmschlitz (34) aufweist, und zwei einander bezüglich der Längsachse (L) beiderseits des Klemmschlitzes (34) gegenüberliegende, parallel zur Längsachse (L) erstreckte Seitenwangen (31) aufweist, die mit dem Rohrkörper (33) verbunden sind und die jeweils ein von dem Rohrkörper (33) beabstandetes, in Längsrichtung erstrecktes Langloch (32) aufweisen, wobei ein Spannbolzen (51) einer Spanneinrichtung (5) durch die beiden Langlöcher (32) und mindestens eine Öffnung der Trageinheit (4) hindurchgeführt ist, und über den Spannbolzen (51) eine die Seitenwangen (31) gegeneinander belastende Spannkraft (F) aufbringbar ist,
**dadurch gekennzeichnet,**
**dass** jede Seitenwange (31) jeweils einen von dem Rohrkörper (33) frei abstehenden achsfernen Außenbereich (31a) aufweist, der das Langloch (32) umfasst, und einen an dem Rohrkörper (33) fixierten achsnahen Innenbereich (31b), wobei jeweils ein Stützelement (36) mit einer Seitenwange (31) zwischen dem Langloch (32) und dem Innenbereich (31b) verbunden ist und mit dem Rohrkörper (33) in einem Randbereich des Klemmschlitzes (34) verbunden ist.

2. Lenksäule nach Anspruch 1, **dadurch gekennzeichnet, dass** die Seitenwangen (31) und/oder die Stützelemente (36) plattenförmig ausgebildet sind.

3. Lenksäule nach einem der vorangehenden Ansprüche, **dadurch gekennzeichnet, dass** die Seitenwangen (31), die Stützelemente (36) und/oder der Rohrkörper (33) Blechformteile aufweisen.

4. Lenksäule nach einem der vorangehenden Ansprüche, **dadurch gekennzeichnet, dass** die Seitenwangen (31), die Stützelemente (36) und der Rohrkörper (36) über Fügeverbindungen (35, 37, 38) miteinander verbunden sind.

5. Lenksäule nach einem der vorangehenden Ansprüche, **dadurch gekennzeichnet, dass** eine Seitenwange (31) in ihrem Innenbereich (31b) direkt mit dem Rohrkörper (33) verbunden ist.

6. Lenksäule nach einem der vorangehenden Ansprüche, **dadurch gekennzeichnet, dass** ein Stützelement (36) mit einer Seitenwange (31) zwischen dem Innenbereich (31b) und dem Außenbereich (31a) verbunden ist.

7. Lenksäule nach einem der vorangehenden Ansprüche, **dadurch gekennzeichnet, dass** ein Stützelement (36) jeweils in einem Randbereich eines Langlochs (32) mit der Seitenwange (31) verbunden ist.

8. Lenksäule nach einem der vorangehenden Ansprüche, **dadurch gekennzeichnet, dass** ein Stützelement (36) winklig von einer Seitenwange (31) absteht.

9. Lenksäule nach einem der vorangehenden Ansprüche, **dadurch gekennzeichnet, dass** die Stützelemente (36) auf einem dem Klemmschlitz (34) zugewandten Umfangsabschnitt mit dem Rohrkörper (33) verbunden sind, und die Innenbereiche (31b) auf einem dem Klemmschlitz (34) abgewandten Umfangsabschnitt mit dem Rohrkörper (33) verbunden sind

10. Lenksäule nach einem der vorangehenden Ansprüche, **dadurch gekennzeichnet, dass** das der Rohrkörper (33) zumindest abschnittweise hohlzylindrisch ausgebildet ist.

11. Lenksäule nach einem der vorangehenden Ansprüche, **dadurch gekennzeichnet, dass** die Seitenwangen (31) zwischen Seitenschenkeln (42) der Trageinheit (4) angeordnet sind, die von dem Spannbolzen (51) durchsetzt und gegen die Seitenwangen (31) verspannbar sind.

12. Lenksäule nach einem der vorangehenden Ansprüchen, **dadurch gekennzeichnet, dass** die Seitenwange (31), der Rohrkörper (33) und das Stützelement (36) einen tunnelförmigen Durchgang (39) bilden, der sich in Längsrichtung erstreckt.

## Claims

1. Steering column (1) for a motor vehicle, having an adjusting unit (2) in which a steering spindle (21) is rotatably mounted about a longitudinal axis (L) and which has an outer jacket (3) which may be adjustably secured to a carrier unit (4) and which is able to be clamped to a telescopically adjustable inner jacket (23), wherein the outer jacket (3) has a tubular body (33) with a clamping slot (34) which extends at least in some portions in the longitudinal direction, and two side plates (31) which oppose one another on either side of the clamping slot (34) relative to the longitudinal axis (L) and which extend parallel to the longitudinal axis (L), said two side plates being connected to the tubular body (33) and having in each case an elongated hole (32) which is spaced apart from the tubular body (33) and which extends in the longitudinal direction, wherein a clamping bolt (51) of a clamping device (5) is guided through the two elongated holes (32) and at least one opening of the carrier unit (4), and a clamping force (F) which loads the side plates (31) relative to one another is able to be applied via the clamping bolt (51),
**characterized in that**
each side plate (31) has in each case an outer region (31a) which freely protrudes from the tubular body (33) remote from the axis and which comprises the elongated hole (32), and an inner region (31b) which is fixed to the tubular body (33) in the vicinity of the axis, wherein in each case a support element (36) is connected to a side plate (31) between the elongated hole (32) and the inner region (31b) and is connected to the tubular body (33) in an edge region of the clamping slot (34).

2. Steering column according to Claim 1, **characterized in that** the side plates (31) and/or the support elements (36) are configured to be plate-shaped.

3. Steering column according to one of the preceding claims, **characterized in that** the side plates (31), the support elements (36) and/or the tubular body (33) have sheet metal formed parts.

4. Steering column according to one of the preceding claims, **characterized in that** the side plates (31), the support elements (36) and the tubular body (36) are connected together via joint connections (35, 37, 38).

5. Steering column according to one of the preceding claims, **characterized in that** a side plate (31) is directly connected in its inner region (31b) to the tubular body (33).

6. Steering column according to one of the preceding claims, **characterized in that** a support element (36) is connected to a side plate (31) between the inner region (31b) and the outer region (31a).

7. Steering column according to one of the preceding claims, **characterized in that** a support element (36) is connected to the side plate (31) in each case in an edge region of an elongated hole (32).

8. Steering column according to one of the preceding claims, **characterized in that** a support element (36) protrudes at an angle from a side plate (31).

9. Steering column according to one of the preceding claims, **characterized in that** the support elements (36) are connected to the tubular body (33) on a peripheral portion facing the clamping slot (34), and the inner regions (31b) are connected to the tubular body (33) on a peripheral portion remote from the clamping slot (34).

10. Steering column according to one of the preceding claims, **characterized in that** the tubular body (33) is configured to be hollow-cylindrical at least in some portions.

11. Steering column according to one of the preceding claims, **characterized in that** the side plates (31) are arranged between the side limbs (42) of the carrier unit (4) which are penetrated by the clamping bolt (51) and which are able to be clamped against the side plates (31).

12. Steering column according to one of the preceding claims, **characterized in that** the side plates (31), the tubular body (33) and the support element (36) form a tunnel-shaped through-passage (39) which extends in the longitudinal direction.

## Revendications

1. Colonne de direction (1) pour un véhicule automobile, avec une unité de réglage (2) dans laquelle un arbre de direction (21) est logé de manière à pouvoir tourner autour d'un axe longitudinal (L), et qui présente une enveloppe extérieure (3) pouvant être fixée de manière réglable sur une unité de support (4), qui peut être serrée sur une enveloppe intérieure (23) réglable de manière télescopique, l'enveloppe extérieure (3) présentant un corps tubulaire (33) avec une fente de serrage (34) s'étendant au moins par sections dans la direction longitudinale, et deux éléments de serrage opposés l'un à l'autre par rapport à l'axe longitudinal (L) des deux côtés de la fente de serrage (34), présente des joues latérales (31) s'étendant parallèlement à l'axe longitudinal (L), qui sont reliées au corps tubulaire (33) et qui présentent chacune un trou oblong (32) s'étendant dans la direction longitudinale et espacé du corps tubulaire (33), un boulon de serrage (51) d'un dispositif de serrage (5) étant guidé à travers les deux trous oblongs (32) et au moins une ouverture de l'unité de support (4), et une force de serrage (F) sollicitant les joues latérales (31) l'une contre l'autre pouvant être appliquée par le boulon de serrage (51),
**caractérisé en ce que**,
**en ce que** chaque joue latérale (31) présente respectivement une zone extérieure (31a) éloignée de l'axe et faisant librement saillie du corps tubulaire (33), qui comprend le trou oblong (32), et une zone intérieure (31b) proche de l'axe et fixée sur le corps tubulaire (33), un élément de soutien (36) étant respectivement relié à une joue latérale (31) entre le trou oblong (32) et la zone intérieure (31b) et étant relié au corps tubulaire (33) dans une zone de bordure de la fente de serrage (34).

2. Colonne de direction selon la revendication 1, **caractérisée en ce que** les joues latérales (31) et/ou les éléments de support (36) sont réalisés en forme de plaque.

3. Colonne de direction selon l'une des revendications précédentes, **caractérisée en ce que** les joues latérales (31), les éléments d'appui (36) et/ou le corps tubulaire (33) comportent des pièces moulées en tôle.

4. Colonne de direction selon l'une des revendications précédentes, **caractérisée en ce que** les joues latérales (31), les éléments de support (36) et le corps tubulaire (36) sont reliés entre eux par des assemblages (35, 37, 38).

5. Colonne de direction selon l'une des revendications précédentes, **caractérisée en ce qu'**une joue latérale (31) est directement reliée au corps tubulaire (33) dans sa zone intérieure (31b).

6. Colonne de direction selon l'une des revendications précédentes, **caractérisée en ce qu'**un élément de support (36) est relié à une joue latérale (31) entre la zone intérieure (31b) et la zone extérieure (31a).

7. Colonne de direction selon l'une des revendications précédentes, **caractérisée en ce qu'**un élément de support (36) est relié à la joue latérale (31) respectivement dans une zone de bordure d'un trou oblong (32).

8. Colonne de direction selon l'une des revendications précédentes, **caractérisée en ce qu'**un élément d'appui (36) fait saillie angulairement d'une joue latérale (31).

9. Colonne de direction selon l'une des revendications précédentes, **caractérisée en ce que** les éléments de support (36) sont reliés au corps tubulaire (33) sur une section périphérique tournée vers la fente de serrage (34), et les zones intérieures (31b) sont reliées au corps tubulaire (33) sur une section périphérique opposée à la fente de serrage (34).

10. Colonne de direction selon l'une des revendications précédentes, **caractérisée en ce que** le corps tubulaire (33) est réalisé au moins par sections en forme de cylindre creux.

11. Colonne de direction selon l'une des revendications précédentes, **caractérisée en ce que** les joues latérales (31) sont disposées entre des branches latérales (42) de l'unité de support (4), qui sont traversées par le boulon de serrage (51) et peuvent être serrées contre les joues latérales (31).

12. Colonne de direction selon l'une des revendications précédentes, **caractérisée en ce que** la joue latérale (31), le corps tubulaire (33) et l'élément de support (36) forment un passage en forme de tunnel (39) qui s'étend dans le sens longitudinal.
